# EUROPEAN PATENT APPLICATION

(11) **EP 4 621 478 A1**
(43) Date of publication of application: **24.09.2025**
(21) Application number: 23893685.0
(22) Date of filing: 14.11.2023
(51) Int. Cl.: G02B 27/14

(54) **LIGHT-COMBINING ASSEMBLY, LIGHT SOURCE MODULE, AND PROJECTION DEVICE**

(30) Priority: 23.11.2022 CN 202211476015
(71) Applicant: Shenzhen Roborock Innovation Technology Co., Ltd., Shenzhen, Guangdong 518000 (CN); Beijing Roborock Technology Co., Ltd., Beijing 102206 (CN)
(72) Inventor: ZHANG, Wei, Shenzhen, Guangdong 518000 (CN); LI, Pengbo, Shenzhen, Guangdong 518000 (CN)
(74) Representative: Manitz Finsterwald Patent- und Rechtsanwaltspartnerschaft mbB
(86) International application number: PCT/CN2023/131631
(87) International publication number: WO 2024/109595

(57) **Abstract**

A light-combining assembly (10), a light source module, and a projection device. The light-combining assembly (10) comprises an assembly body. The assembly body has a first light-adjusting surface (110) and a second light-adjusting surface (120). The first light-adjusting surface (110) comprises a first region (111). The second light-adjusting surface (120) comprises a second region (121) and a third region (122) which surrounds the second region (121). The first region (111) and the third region (122) are reflection regions of the same target waveband light beam, and the second region (121) is a transmission region of the target waveband light beam. The first region (111) and the second region (121) are arranged as overlapping to separate a light-combining channel (C), a first light incident channel (L1), and a second light incident channel (L2) opposite to the first light incident channel (L1).

## Description

### CROSS-REFERENCE TO RELATED APPLICATION

The present application claims priority to the Chinese patent application No. 202211476015.6 filed on November 13, 2022, which is incorporated herein by reference in its entirety.

### TECHNICAL FIELD

The present disclosure belongs to the field of photoelectric technologies, and relates to a light-combining assembly, a light source module and a projection device.

### BACKGROUND ART

With the development of photoelectric technologies, many electronic devices are inseparable from optical systems. In some optical systems, it is necessary to combine the light of different optical paths. However, the current light-combining ways, such as using dichroic mirrors, can only achieve the combination of light beams with relatively large spectral separation, and cannot achieve the combination of light beams with the same or similar spectra.

### SUMMARY OF THE INVENTION

In a first aspect of content of the present disclosure, a light-combining assembly is provided and includes: an assembly main body, wherein the assembly main body has a first dimming surface and a second dimming surface; the first dimming surface includes a first region, and the second dimming surface includes a second region and a third region surrounding the second region, wherein the first region and the third region are reflection regions for a light beam in the same target waveband, and the second region is a transmission region for the light beam in the target waveband; the first region and the second region are overlapped to define a light-combining channel, a first light-input channel and a second light-input channel opposite to the first light-input channel; a first light beam incident on the first region from the first light-input channel is reflected by the first region and then transmitted to the light-combining channel; and a second light beam incident from the second light-input channel to the third region is reflected by the third region and then transmitted to the light-combining channel.

In a second aspect of the content of the present disclosure, a light source module is provided and includes: a first light source assembly, a second light source assembly and the light-combining assembly according to the above first aspect, wherein the first light source assembly is used for outputting the first light beam, and enabling the first light beam to be incident on the first region of the light-combining assembly from the first light-input channel, and to be reflected by the first region to the light-combining channel for output; the second light source assembly is used for outputting the second light beam, and enabling the second light beam to be incident on the third region of the light-combining assembly from the second light-input channel, and to be reflected by the third region to the light-combining channel for output.

In a third aspect of the content of the present disclosure, a projection device is provided and includes: a light valve, a projection lens and the light source module according to the above second aspect, wherein an illumination light beam output by the light source module is output after passing through the light valve and the projection lens.

The above description merely summarizes the technical solutions according to the present disclosure. In order to understand the technical means of the present disclosure more clearly, the present invention can be implemented according to the content of the Description, and in order to make the above and other features and effects of the present disclosure more obvious and understandable, the following illustrates specific embodiments of the present disclosure.

### BRIEF DESCRIPTION OF THE DRAWINGS

Fig. 1 shows a schematic structural diagram of a light-combining assembly according to some embodiments of the present disclosure;
Fig. 2 shows a schematic structural diagram of a light-combining assembly according to some other embodiments of the present disclosure;
Fig. 3 shows a schematic structural diagram of a light-combining assembly according to still other embodiments of the present disclosure;
Fig. 4 shows schematic plan views of a first dimming surface and a second dimming surface according to some embodiments of the present disclosure;
Fig. 5 shows a schematic structural diagram of a light-combining assembly according to still some other embodiments of the present disclosure;
Fig. 6 shows a schematic structural diagram of a light-combining assembly according to yet still some other embodiments of the present disclosure;
Fig. 7 shows a schematic structural diagram of a light source module according to some embodiments of the present disclosure;
Fig. 8 shows a schematic structural diagram of a light source module according to some other embodiments of the present disclosure; and
Fig. 9 shows a schematic structural diagram of a projection device according to some embodiments of the present disclosure.

### DETAILED DESCRIPTION

Exemplary embodiments of the present disclosure will be described in more detail below with reference to the accompanying drawings. It should be pointed out that in the drawings, the dimensions of elements may be exaggerated for clarity of illustration. Although the exemplary embodiments of the present disclosure are shown in the drawings, it should be understood that the present disclosure may be implemented in various forms and should not be limited by the embodiments set forth herein. On the contrary, these embodiments are provided for a more thorough understanding of the present disclosure, and will fully convey the scope of the present disclosure to those skilled in the art.

It should be noted that the term "a plurality of" herein includes the cases of two or more. The terms such as "first", "second" and "third" are only used as markers, instead of limiting the number of objects and a precedence relationship thereof. The term "and/or" is only a type of association relationship describing related objects, and means that there may be three types of relationships, for example, A and/or B may mean that A exists alone, A and B exist at the same time, and B exists alone.

Some embodiments of the present disclosure provide a light-combining assembly capable of combining light beams with the same or similar spectra. The light-combining assembly may be applied to a projection illumination system. The projection illumination system is equipped with two light sources of the same color therein, and the light beams provided by the two light sources are combined and then output by using the light-combining assembly according to some embodiments of the present disclosure, so that the luminous flux of the light beams of this color can be effectively improved, thereby improving illumination brightness of the system. Of course, in addition to being applied to the projection illumination system, the light-combining assembly may also be applied to other applicable optical systems, which is not limited by the present embodiment.

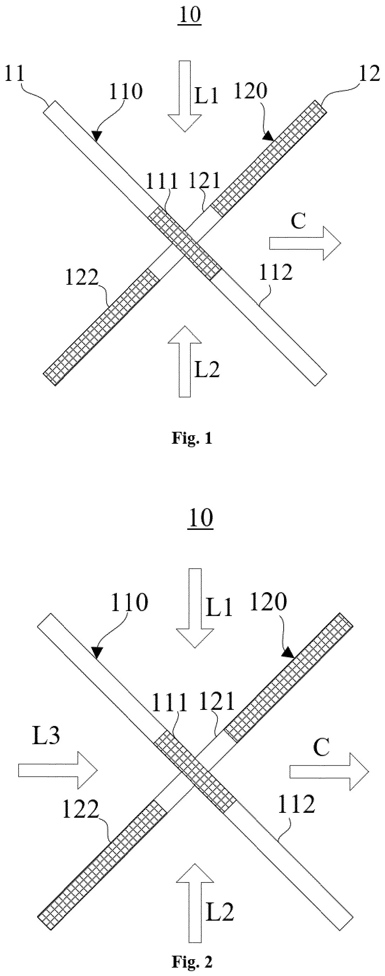

Fig. 1 shows a schematic structural diagram of a light-combining assembly according to some embodiments of the present disclosure. As shown in Fig. 1, the light-combining assembly 10 may include an assembly main body, and the assembly main body has a first dimming surface 110 and a second dimming surface 120. The first dimming surface 110 and the second dimming surface 120 are surfaces that can select the light beams with specific wavelengths in different regions for reflection and transmission.

In some embodiments, the first dimming surface 110 includes a first region 111. The second dimming surface 120 includes a second region 121 and a third region 122 surrounding the second region 121. The first region 111 and the third region 122 are reflection regions for light beams in the same target waveband, while the second region 121 is a transmission region for the above light beams in the target waveband. For example, zoned coating may be performed on the first dimming surface 110 and the second dimming surface 120, the first region 111 and the third region 122 are coated with functional film layers for reflecting the light beams in the target waveband, and the second region 121 is coated with an antireflection film layer.

The target waveband is a waveband where the light-combining assembly 10 may realize light combining through reflection of the reflection regions. In practice, it is necessary to configure the functional film layers of the first region 111 and the third region 122 as the reflection regions, so that the corresponding target waveband thereof is adapted to wavelength ranges of the light beams to be combined. In some embodiments, the wavelength ranges of the two light beams to be combined are λ1-λ2 and λ3-λ4 respectively, wherein λ3 is greater than λ1 and less than λ2, and λ4 is greater than λ2, then the target waveband at least needs to include λ1-λ4. In some embodiments, if the light-combining assembly 10 is applied to combine two red light beams, the target waveband may be a red light waveband. Similarly, in some other embodiments, the target waveband may also be a blue light waveband, a green light waveband, or a yellow light waveband, which is not limited by the present embodiment.

The second region 121 serves as the transmission region for the light beams in the target waveband, and a transmission range thereof may only include the target waveband or the whole waveband, which is set according to the needs of an actual application scene, and not limited by the present embodiment. In some embodiments, the second region 121 may be an opening region or a transparent material region.

Thus, the first dimming surface 110 and the second dimming surface 120 can have the zoned reflection characteristics for the light beams in the target waveband, that is, the light beams are reflected in the first region 111, transmitted in the second region 121 and reflected in the third region 122.

Herein, for the purpose of illustration, the two light beams to be combined are called a first light beam and a second light beam respectively, and the wavelength ranges of the first light beam and the second light beam need to both belong to the abovementioned target waveband. In some embodiments, the wavelength ranges of the first light beam and the second light beam may be the same or partially overlapped. In some other embodiments, the wavelength ranges of the first light beam and the second light beam may also be separated from each other, but have a relatively small degree of separation, and both fall within the abovementioned target waveband.

In the light-combining assembly 10, the above first region 111 and second region 121 are overlapped to form a first light-input channel L1, a second light-input channel L2, and a light-combining channel C located at the same side of the first dimming surface 110 as the first light-input channel L1. During implementation, by configuring the areas of the first region 111, the second region 121 and the third region 122, and the overlapping of the first region 111 and the second region 121, at least part of the first light beam incident on the first region 111 can be reflected through the first region 111 and transmitted to the light-combining channel C. At least part of the second light beam incident on the third region 122 can be reflected through the third region 122 and transmitted to the light-combining channel C, and combined with the first light beam transmitted to the light-combining channel C.

When in use, the first light beam may be input from the first light-input channel L1 and the second light beam may be input from the second light-input channel L2. The first light beam incident from the first light-input channel L1 to the first region 111 is reflected through the first region 111 and then transmitted to the light-combining channel C; the second light beam incident from the second light-input channel L2 to the third region 122 is reflected through the third region 122 and then transmitted to the light-combining channel C, thereby combining the first light beam and the second light beam with the same or similar spectra.

Some embodiments of the present disclosure realize the combination of the light beams with the same or similar spectra by setting the reflection regions in different regions of the two dimming surfaces and making the reflection region of the first dimming surface 110 be overlapped with the transmission region of the second dimming surface 120.

In some embodiments, considering that the first light beam is reflected through the first region 111 overlapped with the second region 121, and the second light beam is reflected through the third region 122 located at the periphery of the second region 121, in practice, the beam diameter of the first light beam may be relatively small, so that light spots irradiating on the first dimming surface 110 should not exceed the first region 111 as much as possible to reduce unnecessary light loss; while the beam diameter of the second light beam may be relatively large, so that light spots irradiating on the second dimming surface 120 are at least partially overlapped with the third region 122, so as to increase the combined luminous flux of the second light beam.

In some embodiments, the energy density of the first light beam with a relatively small beam diameter may be increased as much as possible to improve the combined light brightness. In some embodiments, the first light beam may be a light beam emitted by a laser light source, or may also be a fluorescent light beam generated by excitation of a pump laser. The second light beam may be a light beam emitted by a light-emitting diode (LED) light source. By taking the combination of red light beams as an example, the first light beam may be a light beam output by a red laser light source, and the second light beam may be a light beam output by a red LED light source.

It should be noted that, on the basis of combining the first light beam and the second light beam, the optical path coupling of the combined light beam of the first light beam and the second light beam with the light beams in other wavebands may also be realized by using transmission characteristics of the above light-combining assembly 10 for the light beams in other wavebands. In some embodiments, if the target waveband is a red light waveband, that is, both the first light beam and the second light beam are red light beams, the first dimming surface 110 and the second dimming surface 120 are further configured to transmit at least one of light beams in the blue and green light wavebands. Fig. 2 shows a schematic structural diagram of a light-combining assembly according to some other embodiments of the present disclosure. As shown in Fig. 2, a space region opposite to the light-combining channel C may serve as a third light-input channel L3, and the blue light beam and/or green light beam input from the third light-input channel L3 may be transmitted to the light-combining channel C through the light-combining assembly 10 for combining with the two red light beams transmitted to the light-combining channel C.

In some embodiments, the first dimming surface 110 may be perpendicular to the second dimming surface 120, so that the first region 111 is perpendicular to the second region 121 and the third region 122, so as to simplify an optical path design of the incident light and realize coaxial output of the combined light beam. It should be noted that the expression perpendicular here may be understood as perpendicular in a broad sense, that is, within an actually acceptable error range, and the intersecting angle may also have a certain deviation from 90 degrees representing absolutely perpendicular, and for example, may be 89 degrees, 89.5 degrees, 90 degrees, 90.5 degrees or 91 degrees, which is not limited by the present embodiment.

In some embodiments, by configuring the overlapping position of the first region 111 and the second region 121, the first region 111 may be divided by the second region 121 into two sub-regions located at both sides of the second dimming surface 120 respectively, and the second region 121 may be divided by the first region 111 into two sub-regions located at both sides of the first dimming surface 110 respectively. In some embodiments, the shapes of the first region 111 and the second region 121 may be both axisymmetric shapes, such as circles and squares. At this time, one region may be divided by the other region into two symmetrical sub-regions along the central axis and vice versa, which can not only reduce the light loss as much as possible and improve the combined light brightness, but also design the optical axis of the assembly in the central position, thereby simplifying the optical path design.

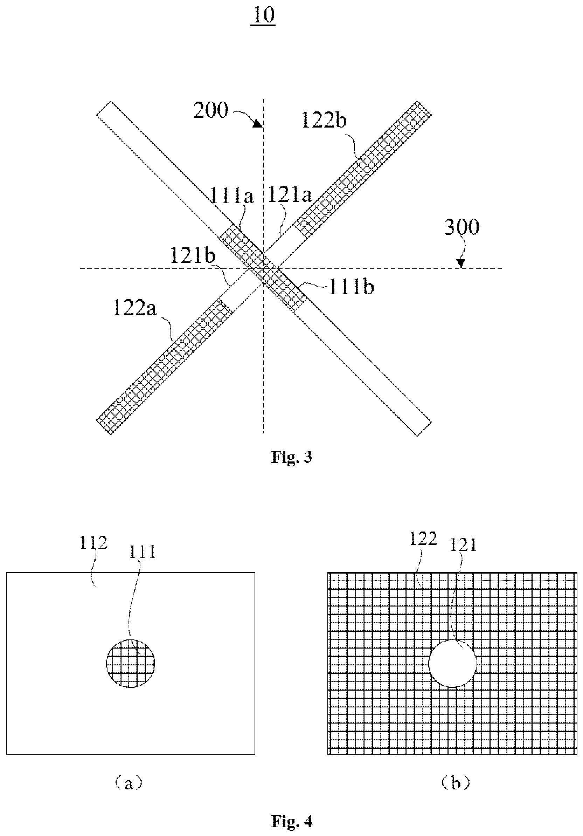

Fig. 3 shows a schematic structural diagram of a light-combining assembly according to still other embodiments of the present disclosure. As shown in Figs. 1 and 3, the first region 111 includes a first sub-region 111a and a second sub-region 111b which are located at both sides of the second dimming surface 120 respectively, the second region 121 includes a third sub-region 121a and a fourth sub-region 121b which are located at both sides of the first dimming surface 110 respectively, and the third region 122 includes a fifth sub-region 122a and a sixth sub-region 122b which are located at both sides of the first dimming surface 110 respectively. When the first light beam and the second light beam are combined, an incident position of the first light beam and an incident position of the second light beam may be adjusted, so that part of the first light beam incident from the first light-input channel L1 is incident on the first sub-region 111a and reflected by the first sub-region 111a, and then enters the light-combining channel C through the third sub-region 121a for output, and the other part of the first light beam is incident on the second sub-region 111b through the third sub-region 121a and then reflected to the light-combining channel C through the second sub-region 111b for output; and part of the second light beam incident from the second light-input channel L2 is reflected to the light-combining channel C through the fifth sub-region 122a for output, and the other part of the second light beam is reflected to the light-combining channel C through the sixth sub-region 122b for output.

It should be noted that although part of the second light beam is lost due to reflection by the second sub-region 111b, transmission through the fourth sub-region 121b followed by reflection by the first sub-region 111a, the lost luminous flux is less than that of the first light beam reflected to the light-combining channel C through the first region 111 when the energy density of the first light beam is greater than that of the second light beam. At this time, compared with the single second light beam, the brightness of the combined light beam is greater. Of course, under the condition that the beam diameter of the first light beam can be adapted, the smaller the areas of the first region 111 and the second region 121 are, the less the energy of the second light beam is lost. Therefore, in practice, the areas of the first region 111 and the second region 121 can be minimized by comprehensively considering the beam diameter and alignment accuracy of the first light beam.

It can be understood that when the first dimming surface 110 is arranged perpendicular to the second dimming surface 120, incident angles of the first light beam and the second light beam are adjusted to 45 degrees and the light emergent positions of corresponding light sources are adjusted to enable optical axes of the first light beam and the second light beam to be coincided, so that the first light beam reflected through the first region 111 and the second light beam reflected through the third region 122 can be coaxially output in the light-combining channel C.

In some embodiments, the overlapping of the reflection region of the first dimming surface 110 and the transmission region of the second dimming surface affects the brightness of the combined light output by the light-combining assembly 10 to some extent. Next, by taking a first reference plane 200 and a second reference plane 300 shown in Fig. 3 as reference planes, according to an orthographic projection relationship of respective sub-regions on the first reference plane 200 and the second reference plane 300, the overlapping of respective reflection regions and the corresponding transmission region will be explained.

Under the condition that the first region 111 is perpendicular to the second region 121 and the third region 122, the optical axis of the first light beam is coincided with that of the second light beam, then the optical axis of the combined light beam obtained after reflection is perpendicular to both the optical axes of the first light beam and the second light beam. As shown in Fig. 3, the first reference plane 200 may be a plane perpendicular to the optical axis of the light-combining channel C. The second reference plane 300 is a plane perpendicular to the optical axis of the first light-input channel L1. It should be noted that the optical axis of the above optical channel is the optical axis of the light beam transmitted in the optical channel.

For the purpose of illustration an orthographic projection of the first sub-region 111a on the first reference plane 200 is defined as a first projection region, and an orthographic projection of the third sub-region 121a on the first reference plane 200 is defined as a second projection region. Considering that the part of first light beam incident on the first sub-region 111a needs to pass through the second dimming surface 120 after being reflected by the first sub-region 111a before entering the light-combining channel C, in some embodiments, the first projection region may be in the second projection region, or basically coincided with the second projection region. It should be noted that the expression basically coincided with mentioned herein refers to completely coincided with, or presence of a certain deviation, and the light loss caused by this deviation is within an acceptable range.

In this way, the part of first light beam incident on the first sub-region 111a may be transmitted to the light-combining channel C through the third sub-region 121a, thereby reducing the light loss of the first light beam to improve the combined light brightness. In addition, the first projection region is basically coincided with the second projection region, which is beneficial for reducing the area of the second region 121 and increasing the area of the third region 122, thereby increasing the combined luminous flux of the second light beam.

In some embodiments, in order to avoid unnecessary light loss caused by the fact that the second sub-region 111b blocks the part of second light beam reflected by the fifth sub-region 122a, an orthographic projection of the fifth sub-region 122a on the first reference plane 200 and an orthographic projection of the second sub-region 111b on the first reference plane 200 are not overlapped with each other, so that the part of second light beam reflected by the fifth sub-region 122a can be fully transmitted to the light-combining channel C, thereby reducing the light loss of the second light beam to improve the combined light brightness.

For the purpose of illustration, an orthographic projection of the second sub-region 111b on the second reference plane 300 is defined as a third projection region, and an orthographic projection of the third sub-region 121a on the second reference plane 300 is defined as a fourth projection region. Considering that part of the first light beam needs to pass through the second dimming surface 120 to be incident on the second sub-region 111b, in some embodiments, the third projection region may be in the fourth projection region, or basically coincided with the fourth projection region. In this way, the first light beam incident on the second sub-region 111b can be incident on the second sub-region 111b by fully transmitting the second dimming surface 120 and then is reflected to the light-combining channel C for output, which is also beneficial for reducing the light loss of the first light beam to improve the combined light brightness. In addition, the third projection region is basically coincided with the fourth projection region, which is also beneficial for reducing the area of the second region 121 and increasing the area of the third region 122, thereby increasing the combined luminous flux of the second light beam.

Accordingly, since the sixth sub-region 122b is located outside the third sub-region 121a, an orthographic projection of the sixth sub-region 122b on the second reference plane 300 and the third projection region are not overlapped with each other, thereby ensuring that the part of second light beam incident on the sixth sub-region 122b can be incident on the sixth sub-region 122b without being blocked by the second sub-region 111b.

In some embodiments, the areas and/or shapes of the first sub-region 111a, the second sub-region 111b, the third sub-region 121a and the fourth sub-region 121b above may be the same, so as to improve the combined luminous flux as much as possible, thereby improving the brightness of emergent light.

In some embodiments, the first dimming surface 110 may further include a fourth region 112 surrounding the first region 111. Similar to the second region 121, the fourth region 112 is also a transmission region for the light beams in the target waveband. At this time, in the second light-input channel L2, the light beam incident on the fifth sub-region 122a may directly irradiate on the fifth sub-region 122a, while the light beam incident on the sixth sub-region 122a needs to transmit the fourth region 112 firstly and then irradiate on the sixth sub-region 122b. Fig. 4 shows schematic plan views of the first dimming surface and the second dimming surface according to some embodiments of the present disclosure. In Fig. 4, Fig. (a) is a schematic plan view of the first dimming surface 110, and Fig. (b) is a schematic plan view of the second dimming surface 120. In Fig. (a), the circular region is the first region 111, and the region outside the circular region is the fourth region 112. In Fig. (b), the circular region is the second region 121, and the region outside the circular region is the third region 122.

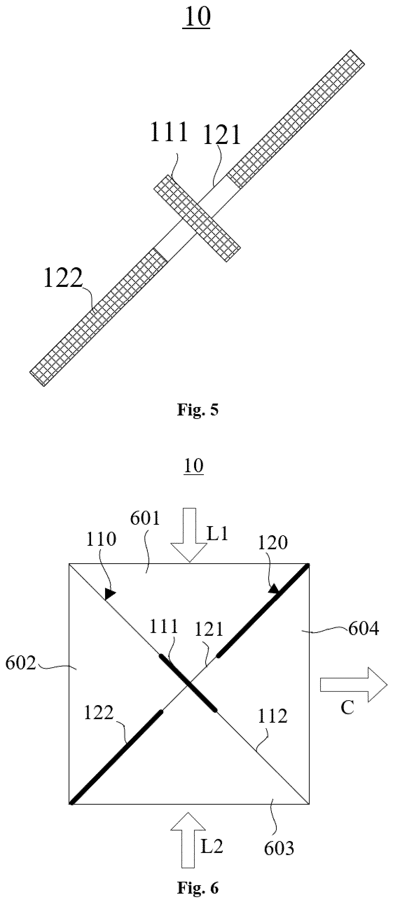

Fig. 5 shows a schematic structural diagram of a light-combining assembly according to still some other embodiments of the present disclosure. Considering that the first region 111 in the first dimming surface 110 contributes to the light combination, as shown in Fig. 5, the first dimming surface 110 may also only include the first region 111, which is not limited in the present embodiment.

In some embodiments, in order to have the first dimming surface 110 and the second dimming surface 120 mentioned above, the assembly main body may include at least two dimming elements, which are in overlapping arrangement. In some embodiments, the overlapping arrangement here may be crisscross arrangement or spliced arrangement. The following mainly takes these two structures as examples for illustration.

In one embodiment, the dimming element may be a dichroic mirror with zoned coatings. As shown in Fig. 1, the assembly main body may include a first dichroic mirror 11 and a second dichroic mirror 12, which are arranged in an intersecting way. At this time, the above first dimming surface 110 is a surface of the first dichroic mirror 11, and the above second dimming surface 120 is a surface of the second dichroic mirror 12.

In one embodiment, it is possible provide a first substrate base and a second substrate base first. For example, the first substrate base and the second substrate base may be made of suitable materials such as glass or silicon, which is not limited in the present embodiment. The first region 111 of the first substrate base and the second region 121 and the third region 122 of the second substrate base are defined in advance according to actual needs.

Then, zoned coating is performed on the first substrate base and the second substrate base to obtain the first dichroic mirror 11 and the second dichroic mirror 12. The process of zoned coating may include coating the upper surface and/or the lower surface of the first region 111 in the first substrate base with a functional film layer(s), and coating the upper surface and/or the lower surface of the third region 122 in the second substrate base with a functional film layer(s). In one embodiment, the target waveband is a red light waveband, and then the functional film layer may be a film layer that reflects the red light waveband and transmits the blue light waveband and/or green light waveband. In one embodiment, the second region 121 may also be coated with an antireflection film layer having antireflection effects on red light, green light and blue light.

Next, the first dichroic mirror 11 and the second dichroic mirror 12 are assembled together in an intersecting manner via some assembly ways, such as snap-fit, with their intersection located in the first region 111 and the second region 121, to obtain the light-combining assembly 10 as shown in Fig. 1.

In some embodiments, the second region 121 of the second dichroic mirror 12 has an opening, and the first dichroic mirror 11 penetrates the opening. In this way, the integrity of the first region 111 can be ensured, and compared with the second region 121 without contributing to the light combination, the integrity of the first region 111 is ensured, which is beneficial for improving the luminous flux of the reflected first light beam to improve the combined light brightness.

In some embodiments, for the first dichroic mirror 11 and the second dichroic mirror 12, the sizes, shapes and region division may be the same, but the coating regions are opposite, the first region 111 in the center is coated with the functional film layer for one, and the third region 122 around is coated with the functional film layer for the other. At this time, the first dimming surface 110 further includes the fourth region 112 surrounding the first region 111.

In some embodiments, the area of the first dichroic mirror 11 may also be less than that of the second dichroic mirror 12, or even so less that the first dimming surface 110 only contains the first region 111, as shown in Fig. 5. In this way, on the one hand, materials can be saved, and on the other hand, the damage to the functional film layer in the third region 122 can be reduced as much as possible or even avoided when a "crisscross" snap-fit way is used for assembly, which is beneficial for ensuring the integrity of the functional film layer in the third region 122, thereby reducing unnecessary light loss to the second light beam to improve the combined light brightness.

In some other embodiments, the dimming element may be an isosceles right-angled prism with zoned coating. The assembly main body may include four isosceles right-angle prisms, and right-angle surfaces of the four isosceles right-angle prisms are spliced with one another. At this time, the first dimming surface 110 and the second dimming surface 120 are formed by splicing the right-angle surfaces of the above four isosceles right-angle prisms, and are mutually overlapped splicing surfaces. Of course, in practice, for the light-combining assembly 10 of such a structure, it is necessary to pay attention to the selection of prism materials and the treatment of a bonding interface, to avoid the following situation that the combined light brightness is affected by the total reflection of the light beam at the bonding interface without the functional film layer.

Fig. 6 shows a schematic structural diagram of a light-combining assembly according to yet still some other embodiments of the present disclosure. As shown in Fig. 6, four isosceles right-angled prisms are a first prism 601, a second prism 602, a third prism 603 and a fourth prism 604 respectively, and zoned coating may be performed on the right-angled surfaces of at least two of the prisms, so that the first dimming surface 110 and the second dimming surface 120 above are obtained after the right-angled surfaces of the four prisms are spliced together in sequence by bonding.

It should be noted that, in other embodiments, the assembly main body may be of other suitable structures besides those shown in Figs. 1, 5 and 6, which is not limited by the present embodiment. In some other embodiments, the assembly main body may also include four square flat plates, zoned coating is performed on two adjacent right-angle surfaces of at least two of the square flat plates, and then the four square flat plates are spliced together to obtain the first dimming surface 110 and the second dimming surface 120 above.

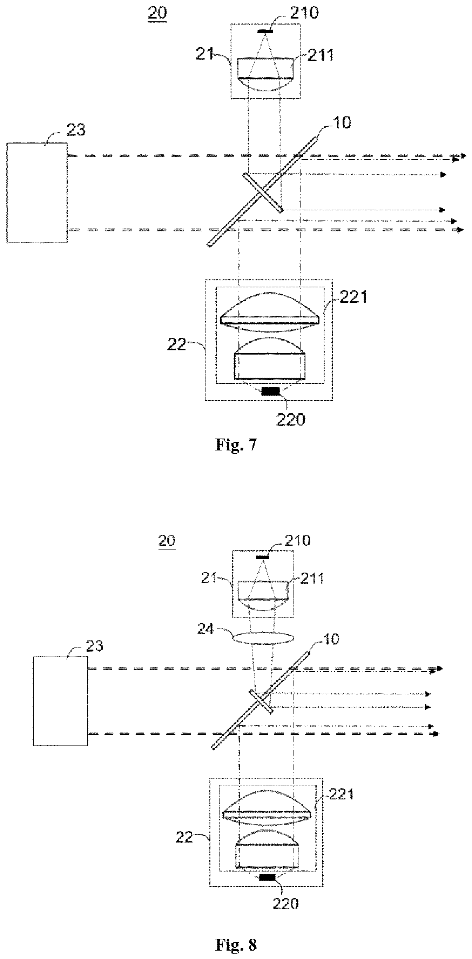

Fig. 7 shows a schematic structural diagram of a light source module according to some embodiments of the present disclosure. Some embodiments of the present disclosure provide a light source module 20. As shown in Fig. 7, the light source module 20 may include a first light source assembly 21, a second light source assembly 22, and the light-combining assembly 10 according to any one of the above embodiments. The structure and effects of the light-combining assembly 10 may refer to the relevant descriptions above, and will not be repeated here.

The first light source assembly 21 is used for outputting the first light beam, and causing the first light beam to be incident on the first region 111 of the light-combining assembly 10 from the first light-input channel L1, and then to be reflected to the light-combining channel C through the first region 111 for output.

The second light source assembly 22 is used for outputting the second light beam, and causing the second light beam to be incident on the third region 122 of the light-combining assembly 10 from the second light-input channel L2, and then to be reflected to the light-combining channel C through the third region 122 for output so as to be combined with the first light beam.

In some embodiments, the first light source assembly 21 may include a first light source 210 and a first collimating lens group 211. The first light beam provided by the first light source 210 is collimated by the first collimating lens group 211 and then transmitted to the first light-input channel L1 of the light-combining assembly 10. The second light source assembly 22 is opposite to the first light source assembly 21 in terms of a light outlet, and may include a second light source 220 and a second collimating lens group 221. The second light beam provided by the second light source 220 is collimated by the second collimating lens group 221 and then transmitted to the second light-input channel L2 of the light-combining assembly 10.

In some embodiments, the first light source 210 and the second light source 220 may be laser light sources, fluorescent light sources or LED light sources, etc. The wavelengths of the first light beam and the second light beam both belong to the target waveband that can be reflected by the light-combining assembly 10. In some embodiments, the wavelength ranges of the first light beam and the second light beam may be the same or partially overlapped. In some other embodiments, the wavelength ranges of the first light beam and the second light beam may also be separated from each other, but have a relatively small degree of separation, and both fall within the above target waveband.

In some embodiments, the beam diameter of the first light beam is less than that of the second light beam, so as to adapt to the corresponding reflection region of the light-combining assembly 10 and reduce the light loss, thereby improving the combined light brightness. In some embodiments, the energy density of the first light beam may be greater than that of the second light beam to compensate for the lost second light beam, thereby improving the combined light brightness.

Therefore, the first light source 210 may be a light source with the relatively high energy and relatively small beam diameter, may for example be a laser light source, such as a laser diode or a fiber laser, or may also be a fluorescent light source that generates fluorescence under the excitation of a pump laser. The second light source 220 may be a light source with the relatively low energy and relatively small beam diameter, and may for example be an LED light source.

In some embodiments, the area of the first region 111 and the area of the second region 121 in the light-combining assembly 10 are both greater than a corresponding light spot area of the first light beam, and the difference value between the light spot area and each of the area of the first region 111 and the area of the second region 121 is less than or equal to a preset threshold. The preset threshold may be determined according to an actual alignment accuracy and the required combined light brightness, and may for example be 50% of the light spot area. The areas of the first region 111 and the second region 121 are slightly greater than the light spot area, which is beneficial for fully reflecting and transmitting the first light beam and reducing the light loss of the second light beam in the second region 121, thereby improving the combined light brightness.

In some other embodiments, the area of the first region 111 and the area of the second region 121 may be both equal to the corresponding light spot area of the first light beam, which is not limited in the present embodiment.

Fig. 8 shows a schematic structural diagram of a light source module according to some other embodiments of the present disclosure. As shown in Fig. 8, the light source module 20 may further include a focusing lens 24, and the focusing lens 24 may be arranged on a light transmission path between the first light source assembly 21 and the light-combining assembly 10, and is used for converging the first light beam output by the first light source assembly 21 to the first region 111 of the light-combining assembly 10. In this way, the energy density of the first light beam can be increased and the size of light spots of the first light beam irradiating on the first region 111 is reduced, so that the sizes of the first region 111 and the second region 121 can be reduced correspondingly, which is beneficial for reducing the light loss of the second light beam while ensuring the reflected luminous flux of the first light beam, thereby improving the combined light brightness.

Under the condition that the light source module 20 is used as an illumination light source of a projection device, the first light beam and the second light beam each may be light of one of three primary colors. In some embodiments, both the first light beam and the second light beam belong to red light beams, and the first region 111 and the third region 122 in the light-combining assembly 10 are configured to reflect the red light beam and transmit the blue light beam and/or the green light beam. At this time, the light source module 20 may further include a third light source assembly 23. The third light source assembly 23 is used for outputting the blue light beam and/or the green light beam, and causing the blue light beam and/or the green light beam to be incident on the light-combining assembly 10 from the third light-input channel L3 opposite to the light-combining channel C, and then transmitted to the light-combining channel C through the light-combining assembly 10 to be combined with the first light beam and the second light beam. It should be noted that in the optical paths shown in Figs. 7 and 8, the light beam indicated by a single dashed line and output from the first light source assembly 21 is the first light beam, the light beam indicated by a double dot dashed line and output from the second light source assembly 22 is the second light beam, and the light beam indicated by a double dashed line and output from the third light source assembly 23 is the combined light beam of the blue light beam and the green light beam.

In some embodiments, the third light source assembly 23 may include a third light source, a fourth light source, a fluorescence generator, and a light-splitting element capable of transmitting the blue light and reflecting the green light. The third light source is used for providing a first blue light beam as an illumination light beam, and the fourth light source is used for providing a second blue light beam as a pump light beam. The first blue light beam is transmitted to the third light-input channel L3 of the light-combining assembly 10 through the light-splitting element. The fluorescence generator generates the green light beam under the excitation of the second blue light beam, and collimates the same and then transmits the green light beam to the light-splitting element, and the green light beam is then transmitted to the third light-input channel L3 of the light-combining assembly 10 after being reflected by the light-splitting element.

It should be noted that in addition to the above structure, the third light source assembly 23 may also be implemented with other suitable optical path structures, which is not limited in the present embodiment.

Of course, in some other embodiments, the first light beam and the second light beam may also be green light beams. Accordingly, the first region 111 and the third region 122 in the light-combining assembly 10 need to be configured to reflect the green light beam and transmit the blue light beam and the red light beam. Alternatively, the first light beam and the second light beam may also be blue light beams. Accordingly, the first region 111 and the third region 122 in the light-combining assembly 10 need to be configured to reflect the blue light beam and transmit the green light beam and the red light beam, which is not limited by the present embodiment.

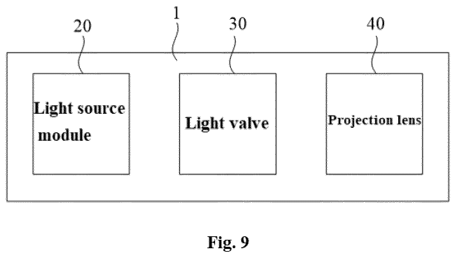

Fig. 9 shows a schematic structural diagram of a projection device according to some embodiments of the present disclosure. Some embodiments of the present disclosure provide a projection device. As shown in Fig. 9, the projection device 1 may include a light source module 20, a light valve 30 and a projection lens 40. The structure of the light source module 20 may refer to the above descriptions, and will not be described here.

The illumination light beams of three primary colors, i.e., red, green and blue, output by the light source module 20 are processed by the light valve 30 and then irradiate on a screen through the projection lens 40 to display a color image. For example, the light valve 30 may be a liquid crystal display (LCD) light valve, a digital micromirror device (DMD) light valve or a liquid crystal on silicon (LCOS) light valve, etc., which is not limited by the present embodiment.

It should be understood by those of ordinary skill in the art that the discussion of any of the above embodiments is only exemplary, and is not intended to imply that the scope of the present disclosure is limited to these examples; and based on the thought of the present disclosure, the technical features in the above embodiments or different embodiments may also be combined, the steps may be implemented in any order, and there are many other variations in different aspects of one or more embodiments of the present disclosure as described above, which are not provided in details for the sake of brevity.

Although the exemplary embodiments of the present disclosure have been described, those skilled in the art can make additional changes and modifications to these embodiments once they know the basic inventive concept. Therefore, the appended claims are intended to be interpreted as including the exemplary embodiments and all changes and modifications that fall within the scope of the present disclosure.

In a first aspect of the present disclosure, a light-combining assembly is provided and includes: an assembly main body, wherein the assembly main body has a first dimming surface and a second dimming surface, the first dimming surface includes a first region, and the second dimming surface includes a second region and a third region surrounding the second region, wherein the first region and the third region are reflection regions for light beams in the same target waveband, and the second region is a transmission region of the light beams in the target waveband; the first region and the second region are overlapped to define a light-combining channel, a first light-input channel and a second light-input channel opposite to the first light-input channel; a first light beam incident on the first region from the first light-input channel is reflected through the first region and then transmitted to the light-combining channel; and a second light beam incident from the second light-input channel to the third region is reflected through the third region and then transmitted to the light-combining channel.

In combination with the first aspect, in some embodiments, the assembly main body includes at least two dimming elements which are in overlapping arrangement, and the overlapping arrangement includes: mutually intersected or spliced arrangement.

In combination with the first aspect, in some embodiments, the at least two dimming elements include a first dichroic mirror and a second dichroic mirror, the first dichroic mirror and the second dichroic mirror are arranged in an intersected arrangement, the first dimming surface is a surface of the first dichroic mirror, and the second dimming surface is a surface of the second dichroic mirror.

In combination with the first aspect, in some embodiments, the second region of the second dichroic mirror has an opening, and the first dichroic mirror penetrates the opening, so that the first region and the second region are overlapped.

In combination with the first aspect, in some embodiments, the at least two dimming elements include four isosceles right-angle prisms, and right-angle surfaces of the four isosceles right-angle prisms are spliced with one another, so that the first dimming surface and the second dimming surface are spliced surfaces being overlapped with each other.

In combination with the first aspect, in some embodiments, the first region is perpendicular to the second region and the third region.

In combination with the first aspect, in some embodiments, the first region includes a first sub-region and a second sub-region which are located at both sides of the second dimming surface respectively, the second region includes a third sub-region and a fourth sub-region which are located at both sides of the first dimming surface respectively, and the third region includes a fifth sub-region and a sixth sub-region which are located at both sides of the first dimming surface respectively; part of the first light beam incident from the first light-input channel is incident on the first sub-region and reflected by the first sub-region, and then enters the light-combining channel through the third sub-region for output, and the other part of the first light beam is incident on the second sub-region through the third sub-region and then reflected to the light-combining channel through the second sub-region for output; and part of the second light beam incident from the second light-input channel is reflected to the light-combining channel through the fifth sub-region for output, and part of the second light beam is reflected to the light-combining channel through the sixth sub-region for output.

In combination with the first aspect, in some embodiments, an orthographic projection of the first sub-region on a first reference plane is a first projection region; an orthographic projection of the third sub-region on the first reference plane is a second projection region; the first reference plane is a plane perpendicular to an optical axis of the light-combining channel; and the first projection region is in the second projection region, or basically coincided with the second projection region.

In combination with the first aspect, in some embodiments, an orthographic projection of the fifth sub-region on the first reference plane and an orthographic projection of the second sub-region on the first reference plane are not overlapped with each other.

In combination with the first aspect, in some embodiments, an orthographic projection of the second sub-region on a second reference plane is a third projection region; an orthographic projection of the third sub-region on the second reference plane is a fourth projection region; the second reference plane is a plane perpendicular to an optical axis of the first light-input channel; and the third projection region is in the fourth projection region, or basically coincided with the fourth projection region.

In combination with the first aspect, in some embodiments, areas and/or shapes of the first sub-region, the second sub-region, the third sub-region and the fourth sub-region are the same.

In combination with the first aspect, in some embodiments, the first dimming surface further includes a fourth region surrounding the first region, and the fourth region is a transmission region for the light beams in the target waveband.

In combination with the first aspect, in some embodiments, the target waveband is a red light waveband, and the first dimming surface and the second dimming surface are further configured to transmit light beams in a blue light waveband and/or a green light waveband.

In a second aspect of the present disclosure, a light source module is provided and includes: a first light source assembly, a second light source assembly and the light-combining assembly according to any one of the above embodiments, wherein the first light source assembly is used for outputting the first light beam, and enabling the first light beam to be incident on the first region of the light-combining assembly from the first light-input channel, and to be reflected to the light-combining channel through the first region for output; the second light source assembly is used for outputting the second light beam, and enabling the second light beam to be incident on the third region of the light-combining assembly from the second light-input channel, and to be reflected to the light-combining channel through the third region for output.

In combination with the second aspect, in some embodiments, each of the first light beam and the second light beam is a red light beam, the first region and the third region are configured to reflect the red light beam and transmit a blue light beam and/or a green light beam, and the light source module further includes: a third light source assembly for outputting the blue light beam and/or the green light beam, and enabling the blue light beam and the green light beam to be incident on the light-combining assembly from a third light-input channel opposite to the light-combining channel, and then transmitted to the light-combining channel through the light-combining assembly.

In combination with the second aspect, in some embodiments, the beam diameter of the first light beam is less than the beam diameter of the second light beam, and the energy density of the first light beam is greater than the energy density of the second light beam.

In combination with the second aspect, in some embodiments, the first light source assembly includes a laser light source, and the second light source assembly includes an LED light source.

In combination with the second aspect, in some embodiments, wavelength ranges of the first light beam and the second light beam are the same or partially overlapped.

In combination with the second aspect, in some embodiments, the area of the first region and the area of the second region in the light-combining assembly are both greater than the corresponding light spot area of the first light beam, and a difference value between each area and the light spot area is less than or equal to a preset threshold; or the area of the first region and the area of the second region in the light-combining assembly are both equal to the corresponding light spot area of the first light beam.

In combination with the second aspect, in some embodiments, the light source module further includes: a focusing lens, the focusing lens is arranged on a light transmission path between the first light source assembly and the light-combining assembly, and the focusing lens is used for converging the first light beam output by the first light source assembly to the first region of the light-combining assembly.

In a third aspect of the present disclosure, a projection device is provided and includes: a light valve, a projection lens and the light source module according to the second aspect of the present disclosure, wherein an illumination light beam output by the light source module is output after passing through the light valve and the projection lens.

## Claims

1. A light-combining assembly, comprising:
an assembly main body, wherein the assembly main body has a first dimming surface (110) and a second dimming surface (120), the first dimming surface (110) comprises a first region (111), and the second dimming surface (120) comprises a second region (121) and a third region (122) surrounding the second region (121), wherein
the first region (111) and the third region (122) are reflection regions for a light beam in a same target waveband, and the second region (121) is a transmission region for the light beam in the target waveband;
the first region (111) and the second region (121) are overlapped to define a light-combining channel, a first light-input channel, and a second light-input channel opposite to the first light-input channel; and
a first light beam incident on the first region (111) from the first light-input channel is reflected by the first region (111) and then transmitted to the light-combining channel, and a second light beam incident from the second light-input channel to the third region (122) is reflected by the third region (122) and then transmitted to the light-combining channel.

2. The light-combining assembly according to claim 1, wherein the assembly main body comprises at least two dimming elements, in overlapping arrangement, and the overlapping arrangement comprises a mutually intersected or spliced arrangement.

3. The light-combining assembly according to claim 2, wherein the at least two dimming elements comprise a first dichroic mirror (11) and a second dichroic mirror (12) in an intersected arrangement, the first dimming surface (110) is a surface of the first dichroic mirror (11), and the second dimming surface (120) is a surface of the second dichroic mirror (12).

4. The light-combining assembly according to claim 3, wherein the second region (121) of the second dichroic mirror (12) has an opening and the first dichroic mirror (11) penetrates the opening, so that the first region (111) and the second region (121) are overlapped.

5. The light-combining assembly according to claim 2, wherein the at least two dimming elements comprise four isosceles right-angle prisms, and right-angle surfaces of the four isosceles right-angle prisms are spliced to one another, so that the first dimming surface (110) and the second dimming surface (120) are spliced surfaces being overlapped with each other.

6. The light-combining assembly according to claim 1, wherein the first region (111) is perpendicular to the second region (121) and the third region (122).

7. The light-combining assembly according to claim 1, wherein
the first region (111) comprises a first sub-region (111a) and a second sub-region (111b) located at both sides of the second dimming surface (120) respectively, the second region (121) comprises a third sub-region (121a) and a fourth sub-region (121b) located at both sides of the first dimming surface (110) respectively, and the third region (122) comprises a fifth sub-region (122a) and a sixth sub-region (122b) located at both sides of the first dimming surface (110) respectively;
part of the first light beam incident from the first light-input channel is incident on the first sub-region (111a) and reflected by the first sub-region (111a), and then transmitted to the light-combining channel through the third sub-region (121a) for output, and another part of the first light beam is incident on the second sub-region (111b) through the third sub-region (121a) and then reflected by the second sub-region (111b) to the light-combining channel for output; and
part of the second light beam incident from the second light-input channel is reflected by the fifth sub-region (122a) to the light-combining channel for output, and part of the second light beam is reflected by the sixth sub-region (122b) to the light-combining channel for output.

8. The light-combining assembly according to claim 7, wherein an orthographic projection of the first sub-region (111a) on a first reference plane (200) is a first projection region, an orthographic projection of the third sub-region (121a) on the first reference plane (200) is a second projection region, the first reference plane (200) is a plane perpendicular to an optical axis of the light-combining channel, and the first projection region is located in the second projection region or basically coincided with the second projection region.

9. The light-combining assembly according to claim 8, wherein an orthographic projection of the fifth sub-region (122a) on the first reference plane (200) and an orthographic projection of the second sub-region (111b) on the first reference plane (200) are not overlapped with each other.

10. The light-combining assembly according to claim 7, wherein an orthographic projection of the second sub-region (111b) on a second reference plane (300) is a third projection region, an orthographic projection of the third sub-region (121a) on the second reference plane (300) is a fourth projection region, the second reference plane (300) is a plane perpendicular to an optical axis of the first light-input channel, and the third projection region is located in the fourth projection region or basically coincided with the fourth projection region.

11. The light-combining assembly according to claim 7, wherein the first sub-region (111a), the second sub-region (111b), the third sub-region (121a), and the fourth sub-region (121b) are the same in at least one of area or shape.

12. The light-combining assembly according to claim 1, wherein the first dimming surface (110) further comprises a fourth region (112) surrounding the first region (111), and the fourth region (112) is a transmission region for the light beam in the target waveband.

13. The light-combining assembly according to claim 1, wherein the target waveband is a red light waveband, and the first dimming surface (110) and the second dimming surface (120) are further configured to transmit a light beam in at least one of a blue light waveband or a green light waveband.

14. A light source module, comprising a first light source assembly (21), a second light source assembly (22), and the light-combining assembly (10) according to any one of claims 1 to 13, wherein:
the first light source assembly (21) is used for outputting the first light beam, and enabling the first light beam to be incident on the first region (111) of the light-combining assembly (10) from the first light-input channel, and to be reflected by the first region (111) to the light-combining channel for output; and
the second light source assembly (22) is used for outputting the second light beam, and enabling the second light beam to be incident on the third region (122) of the light-combining assembly (10) from the second light-input channel, and to be reflected by the third region (122) to the light-combining channel for output.

15. The light source module according to claim 14, wherein
both the first light beam and the second light beam belong to red light beams, the first region (111) and the third region (122) are configured to reflect the red light beams and transmit at least one of a blue light beam or a green light beam, and the light source module further comprises:
a third light source assembly (23), configured for outputting at least one of the blue light beam or the green light beam, and enabling the blue light beam and the green light beam to be incident on the light-combining assembly (10) from a third light-input channel opposite to the light-combining channel, and then transmitted to the light-combining channel through the light-combining assembly (10).

16. The light source module according to claim 14, wherein a beam diameter of the first light beam is less than a beam diameter of the second light beam and an energy density of the first light beam is greater than an energy density of the second light beam.

17. The light source module according to claim 16, wherein the first light source assembly (21) comprises a laser light source, and the second light source assembly (22) comprises a Light Emitting Diode (LED) light source.

18. The light source module according to claim 14, wherein wavelength ranges of the first light beam and the second light beam are the same or partially overlapped.

19. The light source module according to claim 14, wherein
an area of the first region (111) and an area of the second region (121) in the light-combining assembly (10) are both greater than a light spot area corresponding to the first light beam, and a difference value between each of the areas and the light spot area is less than or equal to a preset threshold; or
the area of the first region (111) and the area of the second region (121) in the light-combining assembly (10) are both equal to the light spot area corresponding to the first light beam.

20. The light source module according to claim 14, further comprising a focusing lens (24), wherein the focusing lens (24) is arranged on a light transmission path between the first light source assembly (21) and the light-combining assembly (10), and the focusing lens (24) is used for converging the first light beam output by the first light source assembly (21) to the first region (111) of the light-combining assembly (10).

21. A projection device, comprising:
the light source module according to any one of claims 14 to 20;
a light valve; and
a projection lens,
wherein an illumination light beam output by the light source module is output after passing through the light valve and the projection lens.
